# EUROPÄISCHE PATENTANMELDUNG

(11) **EP 1 492 300 A1**
(43) Veröffentlichungstag der Anmeldung: **29.12.2004**
(21) Anmeldenummer: 04014757.1
(22) Anmeldetag: 23.06.2004
(51) Int. Cl.: H04L 29/06, H04L 12/58

(54) **Verfahren und Anordnung zum Zugriff auf ein erstes Endgerät eines ersten Kommunikationsnetzwerkes durch einen Kommunikationsknoten in einem zweiten Kommunikationsnetzwerk**

(30) Priorität: 27.06.2003 DE 10329084
(71) Anmelder: SIEMENS AKTIENGESELLSCHAFT, 80333 München (DE)
(72) Erfinder: Bozionek, Bruno, 33178 Borchen (DE); Hemkemeyer, Dieter, 59302 Ölde (DE); Zimmermann, Rainer, 33106 Paderborn (DE)

(57) **Zusammenfassung**

Zum Zugriff auf ein erstes Endgerät (EG1) eines ersten Kommunikationsnetzwerkes (N1) durch einen zweiten Kommunikationsknoten (K2) in einem zweiten Kommunikationsnetzwerk (N2) sind das erste und das zweite Kommunikationsnetzwerk (N1 und N2) zum Austausch von Steuerdaten über einen Proxy-Server (PRX) miteinander verbunden. Das erste Endgerät (EG1) wird durch den Proxy-Server (PRX) bei dem zweiten Kommunikationsknoten (N2) wie ein Endgerät des zweiten Kommunikationsknotens (K2) angemeldet, so dass der zweite Kommunikationsknoten (K2) das erste Endgerät (EG1) als ein Endgerät des zweiten Kommunikationsknotens (K2) verwaltet. Das erste Endgerät (EG1) wird dann von dem Proxy-Server (PRX) in dem zweiten Kommunikationsnetzwerk (N2) repräsentiert, indem die Steuerdaten, die das erste Endgerät betreffen, zwischen dem ersten Kommunikationsknoten (K1) und dem zweiten Kommunikationsknoten (K2) jeweils über den Proxy-Server (PRX) übertragen werden.

## Beschreibung

Die Erfindung betrifft ein Verfahren zum Zugriff auf ein erstes Endgerät eines ersten Kommunikationsnetzwerkes durch einen zweiten Kommunikationsknoten in einem zweiten Kommunikationsnetzwerk gemäß des Oberbegriffs des Patentanspruchs 1, und eine Anordnung zur Durchführung des Verfahrens nach dem Oberbegriff des Patentanspruchs 9.

Für den Betrieb von Endgeräten, insbesondere von Sprachendgeräten, Telefaxgeräten und ähnlichen Kommunikationsendgeräten, werden Kommunikationsnetzwerke unterschiedlicher Topologie und verschiedenen technischen Aufbaus betrieben. So wird beispielsweise unterschieden zwischen leitungsvermittelnden Kommunikationsnetzwerken, zu denen das bekannte ISDN-Netz und viele andere öffentliche Kommunikationsnetzwerke zählen, und den paketvermittelten Netzwerken, in denen die Nutzinformation in Form von Datenpaketen, beispielsweise gemäß des Internet-Protokolls (IP-Protokoll), übertragen werden. Letztgenannte werden auch als Sprachdatennetze oder VoIP-Netzwerke (VoIP = Voice-over-Internet-Protocol) bezeichnet.

Sowohl zu der Gruppe der leitungsvermittelten Kommunikationsnetzwerke, als auch zu der Gruppe der paketvermittelten Kommunikationsnetzwerke gehören verschiedene Arten von Netzwerken, die sich technisch derart voneinander unterscheiden, dass die jeweiligen Komponenten dieser Netzwerke nicht ohne weiteres miteinander in Verbindung treten können. So findet man beispielsweise unter den leitungsvermittelten Kommunikationsnetzwerken analoge und digitale Kommunikationsnetzwerke, die nur mit Hilfe zwischengeschalteter Komponenten, die häufig auch als Gateways bezeichnet werden, untereinander Informationen austauschen können. Dabei führen die Gateways sowohl eine Medienkonvertierung (zwischen unterschiedlichen Übertragungswegen) als auch eine Signalisierungskonvertierung (zwischen unterschiedlichen Kommunikationsprotokollen) durch; im Folgenden wird der Begriff "Gateway" jedoch auch für Einrichtungen verwendet, die ausschließlich eine Signalisierungskonvertierung durchführen. Auch im Falle der paketvermittelten Kommunikationsnetzwerke werden verschiedene Ausführungsformen unterschieden, die entweder gar nicht oder nur in eingeschränktem Maße miteinander kommunizieren können, wenn keine Einrichtung zur Signalisierungskonvertierung (auch als "Border Element" oder "Signalisierungsinterworking-Unit" bezeichnet; hier auch: "Gateway") zwischen diese Netzwerke geschaltet wird. Bei den paketvermittelten Kommunikationsnetzwerken ist der häufigste Grund für diese funktionale Einschränkung, dass in den verschiedenen Kommunikationsnetzwerken auch verschiedene Kommunikationsprotokolle zum Einsatz kommen. Selbst wenn zur Übertragung der Datenpakete das gleiche Übertragungsprotokoll - meist das bekannte Internet-Protokoll - eingesetzt wird, sind diese Netzwerke häufig nicht miteinander kompatibel, wenn die Steuerdaten und/oder die Nutzinformationen gemäß unterschiedlichen Kommunikationsprotokollen aufgebaut sind. Beispiele für solche, zumindest bezüglich der Steuerdaten nicht vollständig kompatibler Kommunikationsprotokolle sind das ITU-T-H.323-Protokoll und das IETF-SIP (SIP = Session Initiation Protocol). Wenn in einem Sprachdatennetz sowohl Kommunikationskomponenten betrieben werden, die nach dem H.323-Protokoll miteinander kommunizieren, als auch solche Komponenten, die das SIP-Protokoll benutzen, betrachtet man trotz der gemeinsam genutzten Netzinfrastruktur in dieser Anordnung zwei (logisch getrennte) Kommunikationsnetzwerke.

Im Folgenden bezeichnet der Begriff "Steuerdaten" sowohl Signalisierungsinformationen zur Steuerung einer Verbindung oder eines Gerätes, als auch Zustandsinformationen, die den Betriebszustand eines Endgerätes (z.B. "frei", "besetzt", "online", "offline") oder einer anderen Netzwerkkomponente (z.B. "Betriebsbereit", "Störung", "Leerlauf", "ausgelastet") beschreiben.

Bei den Komponenten in den Kommunikationsnetzwerken wird zwischen den Kommunikationsknoten und den Endgeräten unterschieden, wobei der Begriff "Endgerät" sich nicht auf das bislang meist genutzte Telefon beschränkt, sondern in sehr allgemeiner Form die Quelle oder das Ziel von Nutzinformationen in Kommunikationsnetzwerken bezeichnet. Während die Kommunikationsknoten in den leitungsvermittelten Kommunikationsnetzwerken als Basisfunktionalität das Zusammenschalten von Übertragungsleitungen bzw. von Nutzdatenkanälen (B-Kanäle) zwischen Endgeräten bzw. zwischen Endgeräten und Amts- bzw. Querverbindungsleitungen zur Aufgabe haben, besteht die Funktion der Kommunikationsknoten in den paketvermittelten Kommunikationsnetzwerken im wesentlichen in der Verbindungssteuerung und in der Bereitstellung von notwendigen Steuerinformationen, beispielsweise in Form von Netzwerkadressen. An der Übertragung der Nutzdaten sind Kommunikationsknoten in den paketvermittelten Kommunikationsnetzwerken indes meist nicht direkt beteiligt; diese werden nach Aufbau der logischen Verbindung direkt zwischen den Endgeräten ("end-to-end" oder "peer-topeer") übertragen.

Eine allgemeine Grundanforderung an den Betrieb von Kommunikationsnetzwerken ist die Möglichkeit, Nutzinformationen mit anderen Kommunikationsnetzwerken austauschen zu können. Dazu werden bei den bekannten leitungsvermittelten Kommunikationsnetzwerken die bereits erwähnten Amts- bzw. Querverbindungsleitungen verwendet, wobei in den Fällen, in denen Kommunikationsnetzwerke verschiedener Art verbunden werden, ein Gateway vorgesehen werden muss. Dieses besteht in den leitungsvermittelten Kommunikationsnetzwerken oft aus einem sog. Medienwandler, der häufig bereits in den Kommunikationsknoten selber realisiert ist. Zum Austausch von Nutzinformationen, beispielsweise für Gesprächsverbindungen, zwischen leitungsvermittelten Kommunikationsknoten und Kommunikationsknoten in paketvermittelten Kommunikationsnetzwerken sind ebenfalls Gateways bekannt. Dabei wird eine Anzahl von Amts- bzw. Querverbindungsleitungen von dem leitungsvermittelten Kommunikationsknoten zu dem Gateway geschaltet, während das Gateway auf der anderen Seite mit dem Kommunikationsknoten des paketvermittelten Kommunikationsnetzwerkes in Verbindung steht. Falls das Gateway von diesem letztgenannten Kommunikationsknoten gesteuert wird, bezeichnet man diesen Kommunikationsknoten auch als Gatekeeper. Ein solcher Gatekeeper dient dabei gleichzeitig auch der Umsetzung von Rufnummern, wie sie in den leitungsvermittelten Kommunikationsnetzwerken verwendet werden, in die Netzwerkadressen, die in den paketvermittelten Kommunikationsnetzwerken üblicher Weise zur Adressierung bzw. für den Datenaustausch der dort eingesetzten Endgeräte (häufig auch als Clients bezeichnet) verwendet werden.

Die Kommunikationsknoten in den paketvermittelten Kommunikationsnetzwerken arbeiten mit dem Prinzip der sog. "Anmeldung". Das bedeutet, dass jede Einrichtung dieses Kommunikationsnetzwerkes, also jedes Endgerät und auch jedes Gateway, welches Daten mit diesem Kommunikationsknoten austauschen soll, bei diesem Kommunikationsknoten angemeldet sein muss. Das ist notwendig, weil sich die paketvermittelten Kommunikationsnetzwerke häufig eines Datennetzes bedienen, in dem eine Vielzahl anderer, nicht zu diesem Kommunikationsnetzwerk gehörender Netzwerkkomponenten befinden können. Dabei sind Endgeräte in einer anderen Weise angemeldet, als das mit den Gateways geschieht.

Neben der Basisfunktionalität, die im Aufbau und im Betrieb von Kommunikationsverbindungen besteht, bieten moderne Kommunikationsnetzwerke darüber hinausgehende Dienste. Das bereits erwähnte SIP-Protokoll erlaubt es beispielsweise, auf einem Endgerät, welches mit einem Display ausgestattet ist, permanent den Betriebszustand einer Anzahl oder aller anderen Endgeräte des gleichen Kommunikationsnetzwerkes anzuzeigen. Dieser Dienst wird auch als "Presence-Dienst" bezeichnet. Das Funktionieren dieses Dienstes hängt natürlich davon ab, dass der Kommunikationsknoten, der diesen Dienst anbietet, permanent Informationen über den Betriebszustand (Status) des jeweils angezeigten Endgerätes erhält, wobei in der Regel das überwachte Endgerät immer dann selbst diese Informationen zu dem Dienst übermittelt, wenn sich sein Betriebszustand ändert. Ein anderer Dienst, der in dem SIP-Protokoll definiert ist, ist das sog. "Instant Messaging", mit dem auf einfache Weise zwischen den Endgeräten eines Kommunikationsnetzwerkes Nachrichten (z.B. Textnachrichten oder Tonsignale) verschickt werden können. Dabei wird eine Textnachricht von dem sendenden Endgerät zu dem Kommunikationsknoten übermittelt und von diesem Kommunikationsknoten dann zu dem empfangenden Endgerät weitergeleitet. Dabei hat sich als nachteilig erwiesen, dass die beiden beschriebenen Dienste und eine ganze Reihe von weiteren Diensten und Anwendungen zwar innerhalb ein- und desselben Kommunikationsnetzwerkes funktionieren, aber nicht netzübergreifend genutzt werden können. Beispielsweise ist es nicht möglich, in der "Presence-Liste" eines Endgerätes in einem ersten Kommunikationsnetzwerk die Zustandsinformation eines Endgerätes eines anderen Kommunikationsnetzwerkes dauerhaft anzuzeigen, selbst wenn beide Kommunikationsnetzwerke über ein Gateway miteinander verbunden sind. Das liegt daran, dass die erforderlichen Zustandsinformationen nicht über das Gateway zwischen den Kommunikationsknoten ausgetauscht werden.

Aufgabe der Erfindung ist es, ein Verfahren, mit dem Dienste in einem Kommunikationsnetzwerk auch mit Endgeräten eines anderen Kommunikationsnetzwerkes betrieben werden können, und eine Anordnung zur Ausführung des Verfahrens vorzuschlagen.

Die Aufgabe wird für das Verfahren durch die Merkmale des Patentanspruchs 1 und für die Anordnung durch die Merkmale des Patentanspruchs 9 gelöst.

Die Lösung sieht für das Verfahren vor, dass der erste und der zweite Kommunikationsknoten über einen Proxy-Server miteinander verbunden werden. Dabei wird das erste Endgerät bei dem zweiten Kommunikationsknoten wie ein Endgerät des zweiten Kommunikationsknotens angemeldet, so dass der zweite Kommunikationsknoten das erste Endgerät als ein Endgerät des zweiten Kommunikationsknoten verwaltet. Von dem Proxy-Server wird das erste Endgerät in dem zweiten Kommunikationsnetzwerk repräsentiert, indem die Steuerdaten, die das erste Endgerät betreffen, zwischen dem ersten Kommunikationsknoten und dem zweiten Kommunikationsknoten jeweils über den Proxy-Server übertragen werden. Dadurch kann der zweite Kommunikationsknoten auf das Endgerät zugreifen, als ob das Endgerät ein an dem zweiten Kommunikationsknoten angemeldetes Endgerät wäre. In dem zweiten Kommunikationsnetzwerk werden somit Endgeräte des ersten Kommunikationsnetzwerkes registriert, so dass sie von den Anwendungen des zweiten Kommunikationsnetzwerkes zugegriffen und verwaltet werden können. Der Proxy-Server ist also der "Stellvertreter" des ersten Endgerätes in dem zweiten kommunikationsnetzwerk.

Die Lösung sieht für die Anordnung vor, dass ein Proxy-Server für den Zugriff auf das erste Endgerät eingesetzt ist, der eine Registrierungseinrichtung zur Anmeldung des ersten Endgerätes als ein Endgerät des zweiten Kommunikationsnetzwerkes bei dem zweiten Kommunikationsknoten aufweist, und der eine Konvertierungseinrichtung aufweist, die zur Umsetzung derjenigen das erste Endgerät betreffende Steuerdaten, die von dem zweiten Kommunikationsknoten versendet werden, in das Datenformat gemäß des ersten Kommunikationsprotokolls ausgebildet ist, und zur Umsetzung derjenigen das erste Endgerät betreffende Steuerdaten, die von dem ersten Kommunikationsknoten versendet werden, in das Datenformat gemäß des zweiten Kommunikationsprotokolls ausgebildet ist. Durch den Einsatz dieses Proxy-Servers wird gegenüber dem zweiten Kommunikationsknoten das Endgerät des ersten Kommunikationsknotens als ein Endgerät des zweiten Kommunikationsnetzwerkes repräsentiert. Darüber hinaus können durch den Proxy-Server auch mehrere Endgeräte des ersten Kommunikationsnetzwerkes oder auch Endgeräte und Einrichtungen anderer Kommunikationsnetzwerke in dem zweiten Kommunikationsnetzwerk repräsentiert werden. Der Proxy-Server ist dabei nicht zwangsläufig ein eigenständiges Gerät, sondern kann ebenso als eine Software-Komponente zusammen mit anderen Software-Komponenten auf einer gemeinsamen Computer-Hardware installiert sein.

Das Verfahren ist durch die kennzeichnenden Merkmale der abhängigen Patentansprüche 2 bis 8 vorteilhaft ausgestaltet. Die für das Verfahren beschriebenen Vorteile gelten dabei sinngemäß auch für die Anordnung. Die Anordnung ist weiterhin durch die abhängigen Patentansprüche 10 und 11 vorteilhaft weiter ausgestaltet.

Wenn in dem ersten Kommunikationsnetzwerk ein erstes Kommunikationsprotokoll für das Datenformat der in dem ersten Kommunikationsnetzwerk verwendeten Steuerdaten verwendet wird, in dem zweiten Kommunikationsnetzwerk ein zweites Kommunikationsprotokoll für das Datenformat der in dem zweiten Kommunikationsnetzwerk verwendeten Steuerdaten verwendet wird, und wenn von dem Proxy-Server die über ihn von dem ersten Kommunikationsknoten zu dem zweiten Kommunikationsknoten übertragenen Steuerdaten von dem Datenformat gemäß des ersten Kommunikationsprotokolls in das Datenformat des zweiten Kommunikationsprotokolls umgesetzt wird, und umgekehrt, dann können mit dem Proxy-Server Kommunikationsnetzwerke mit verschiedenen Kommunikationsprotokollen miteinander verbunden werden. Dabei ergibt sich aus Sicht des zweiten Kommunikationsknotens ein einheitliches Kommunikationsnetzwerk mit nur einem Kommunikationsprotokoll, wobei die Endgeräte des ersten Kommunikationsnetzwerkes von dem zweiten Kommunikationsknoten wie die Endgeräte des zweiten Kommunikationsnetzwerkes behandelt werden können. Aus Sicht des zweiten Kommunikationsknotens entsteht dadurch das sog. "One-System-Image".

Das erste Endgerät kann in die Kommunikationsstruktur des zweiten Kommunikationsnetzwerkes vorteilhaft eingebunden werden, wenn durch den zweiten Kommunikationsknoten in dem zweiten Kommunikationsnetzwerk mindestens ein Dienst realisiert wird, durch den Zustandsinformationen, die das erste Endgerät betreffen, verarbeitet werden. Dabei werden von dem Dienst die Zustandsinformationen in Form einer Anforderungsmeldung, die dem Datenformat des zweiten Kommunikationsprotokolls entspricht, bei dem Proxy-Server angefordert. Von dem Proxy-Server wird die Anforderungsmeldung in das Datenformat des ersten Kommunikationsprotokolls umgesetzt und zu dem ersten Kommunikationsknoten übertragen, wonach von dem ersten Kommunikationsknoten als Antwort die Zustandsinformationen im Datenformat des ersten Kommunikationsprotokolls zu dem Proxy-Server übertragen werden und von dem Proxy-Server diese Zustandsinformationen in das Datenformat der zweiten Kommunikationsprotokolls umgesetzt werden. Danach werden die umgesetzten Zustandsinformationen von dem Proxy-Server zu dem zweiten Kommunikationsknoten übertragen, woraufhin die Zustandsinformationen von dem Dienst in dem zweiten Kommunikationsknoten verarbeitet werden.

Neben dem ersten Kommunikationsknoten können auch weitere Kommunikationsknoten verfügbar sein, die ebenfalls Zustandsinformationen über das erste Endgerät bzw. über den dem ersten Endgerät zugeordneten Benutzer bereithalten. Auch diese Zustandsinformationen können, separat oder zusammen mit dem Zustandsinformationen, die in dem ersten Kommunikationsknoten verfügbar sind, in dem zweiten Kommunikationsnetzwerk verwendet werden, indem durch den zweiten Kommunikationsknoten in dem zweiten Kommunikationsnetzwerk mindestens ein Dienst realisiert wird, durch den Zustandsinformationen, die das erste Endgerät und / oder einen dem ersten Endgerät (EG1) zugeordneten Benutzer betreffen, verarbeitet werden. Dazu werden von dem Dienst mit Steuerdaten in Form einer Anforderungsmeldung, die dem Datenformat des zweiten Kommunikationsprotokolls entspricht, die Zustandsinformationen bei dem Proxy-Server angefordert. Dabei wird der Proxy-Server mit einem dritten Kommunikationsknoten, der Steuerdaten gemäß einem dritten Kommunikationsprotokolls austauscht, verbunden, wobei in dem dritten Kommunikationsknoten Zustandsinformationen über das erste Endgerät gespeichert sind. Dann wird von dem Proxy-Server die Anforderungsmeldung in das Datenformat des dritten Kommunikationsprotokolls umgesetzt und zu dem dritten Kommunikationsknoten werden als Antwort die Zustandsinformationen im Datenformat des dritten Kommunikationsprotokolls zu dem Proxy-Server übertragen, die Zustandsinformationen werden von dem Proxy-Server in das Datenformat des zweiten Kommunikationsprotokolls umgesetzt und zu dem zweiten Kommunikationsknoten übertragen, wonach sie von dem Dienst in dem zweiten Kommunikationsknoten verarbeitet werden.

Wenn als das zweite Kommunikationsnetzwerk ein paketvermitteltes Kommunikationsnetzwerk verwendet wird, in dem das SIP-Protokoll als Kommunikationsprotokoll zum Einsatz kommt, und wenn als der zweite Kommunikationsknoten ein SIP-Proxy-Server eingesetzt wird, können die für SIP-Kommunikationsnetzwerke definierten Anwendungen und Dienste zusammen mit den Endgeräten anderer Kommunikationsnetzwerke mit anderen Kommunikationsprotokollen genutzt werden.

Die Administration des zweiten Kommunikationsknotens wird vereinfacht, indem die Anmeldung des ersten Endgerätes bei dem zweiten Kommunikationsknoten durch den Proxy-Server erfolgt.

Ressourcen können eingespart werden, indem durch den Proxy-Server mehrere Endgeräte in dem zweiten Kommunikationsnetzwerk repräsentiert werden.

Wenn es sich bei dem ersten Kommunikationsnetzwerk und bei dem zweiten Kommunikationsnetzwerk um zwei Sprachdatennetze handelt, bei denen die Nutzinformationen direkt zwischen den Endgeräten ausgetauscht werden, kann auf den Einsatz eines separaten Gateway verzichtet werden, indem von dem Proxy-Server beim Aufbau einer Kommunikationsverbindung zwischen dem ersten Endgerät und einem Endgerät des zweiten Kommunikationsnetzwerkes jeweils die Steuerdaten zwischen dem ersten und dem zweiten Kommunikationsknoten übertragen werden.

Ausführungsbeispiele des erfindungsgemäßen Verfahrens sind nachfolgend anhand der Zeichnungen erläutert und dienen gleichzeitig der Erläuterung eines Ausführungsbeispiels der erfindungsgemäßen Anordnung.

Dabei zeigt
- Figur 1: eine Anordnung aus zwei Kommunikationsnetzwerken, die über einen Proxy-Server miteinander verbunden sind, und
- Figur 2: in zeitlicher Abfolge die Protokollmeldungen, die zum Aufbau einer Gesprächsverbindung zwischen einem Endgerät in einem leitungsvermittelten Netzwerk und einem Endgerät in einem paketvermittelten Netzwerk unter Zwischenschaltung eines Proxy-Servers ausgetauscht werden.

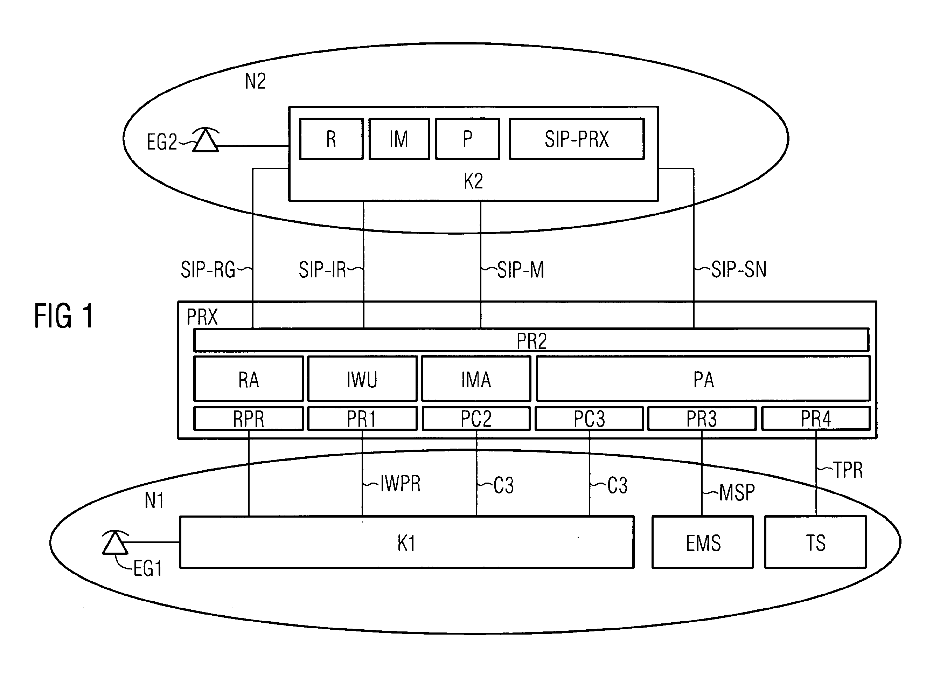

In der Figur 1 sind zwei Kommunikationsnetzwerke N1, N2 gezeigt, die über einen Proxy-Server PRX miteinander verbunden sind. In dem Kommunikationsnetzwerk N1 sind als erster Kommunikationsknoten die Kommunikationsanlage K1, der E-Mail-Server EMS und als zentrale Komponente eines Arbeitszeiterfassungs-Systems der Zeit-Server TS ("time server") gezeigt. Selbstverständlich sind auch an dem Zeit-Server TS und an dem E-Mail-Server EMS Endgeräte und andere Einrichtungen angeschlossen, die aus Gründen der Übersichtlichkeit jedoch nicht dargestellt sind. An der Kommunikationsanlage K1 ist das Endgerät EG1 angeschlossen. In dem Kommunikationsnetzwerk N2 ist als zweiter Kommunikationsknoten der SIP-Server K2 angeordnet, an dem das Endgerät EG2 angemeldet ist. Der SIP-Server umfasst als eine in Form einer Software installierten Komponente (Instanz) den SIP-Proxy-Server SIP-PRX, der zum Austausch von Signalisierungsnachrichten im Kommunikationsnetzwerk N2 verwendet wird und somit eine Funktionalität ausübt, die den Gatekeepern der H.323-Kommunikationsnetzwerke vergleichbar ist.

Der Proxy-Server PRX ist mit einer modular aufgebauten Software ausgestattet, die in verschiedene Einheiten gegliedert ist. Bei diesen Einheiten wird zwischen Einheiten zur Protokollumsetzung (sog. Protokoll-Stacks) und Einheiten zur Realisierung eines Dienstes (sog. Funktions-Module) unterschieden. Die Einheiten zur Protokollumsetzung verfügen jeweils über eine Verbindung zu einer Schnittstelle von Kommunikationsknoten und Servern. Diese Verbindungen, die entweder als Datenleitung oder als ein Kanal in einem Datennetz ausgeführt sind, sind in der Figur 1 in Form von Linien visualisiert, die mit Abkürzungen für das der jeweiligen Verbindung zugeordnete Kommunikationsprotokoll versehen sind.

Die in der Figur 1 visualisierten Verbindungen zwischen den Einheiten zur Protokollumsetzung des Proxy-Servers PRX und den Kommunikationsknoten K1, K2, EMS, TS dienen der Übertragung von Steuer- und Zustandsinformationen. Andere (Nutz-) Informationen, beispielsweise die Sprachinformationen (Sprachdaten), die im Rahmen einer Gesprächsverbindung zwischen den Endgeräten EG1 und EG2 ausgetauscht werden, werden auf einer hier nicht dargestellten separaten logischen Verbindung direkt zwischen den Endgeräten EG1 und EG2 ausgetauscht.

Bei dem Kommunikationsnetzwerk N2 handelt es sich um ein paketvermitteltes Kommunikationsnetzwerk, in welchem das Kommunikationsprotokoll SIP (Session Initiation Protocol) verwendet wird; bei dem SIP-Protokoll handelt es sich um ein von der IETF (Internet Engineering Task-Force) standardisiertes Kommunikationsprotokoll, welches neben den Kommunikationsverbindungen (Telefongespräche, Telefax-Verbindungen o. ä.) als solchen auch weitere Dienste wie das "Instant Messaging" und die "Presence-Applikation" unterstützt. Dabei sind die Funktionen des SIP-Protokoll in funktionale Gruppen zu gliedern; eine Unterprotokoll-Familie" kann dabei als SIP-RG bezeichnet werden und dient der Registrierung von Endgeräten, SIP-IR ist für die Steuerung von Kommunikationsverbindungen zuständig, SIP-M für den Austausch von Nachrichten und SIP-SN für die Belange des "Presence"-Dienstes. Diese Dienste werden im Folgenden näher betrachtet.

Auch die Komponenten des Kommunikationsnetzwerkes N1, insbesondere die Kommunikationsanlage K1, der E-Mail-Server EMS und der Zeit-Server TS sind über ein Datennetz miteinander und mit dem Proxy-Server PRX verbunden. Alternativ können der E-Mail-Server EMS und der Zeit-Server TS auch in einem anderen Kommunikationsnetzwerk angeordnet sein; wichtig ist, dass sie mit dem Proxy-Server PRX verbunden sind. Die Kommunikationsanlage K1 ist derart ausgestaltet, dass sie als Kommunikationsknoten sowohl für paketvermittelt kommunizierende Endgeräte als auch für leitungsvermittelt angeschlossene Endgeräte dient; das Endgerät EG1 ist hier ein leitungsvermittelt angeschlossenes, also ein "klassisches", Endgerät. Die Kommunikationsanlage K1 umfasst dabei ein Gateway (hier nicht dargestellt), welches Kommunikationsverbindungen zwischen leitungsvermittelten und paketvermittelten Endgeräten unterstützt. Prinzipiell ist das Ausführungsbeispiel auch für ein paketvermittelt angeschlossenes Endgerät gültig, wobei dann das in der Kommunikationsanlage K1 integrierte Gateway nicht genutzt wird.

Im Kommunikationsnetzwerk N1 wird - im Unterschied zu dem Kommunikationsnetzwerk N2 - als Kommunikationsprotokoll für die paketvermittelte Sprachdatenkommunikation (VoIP) das ITU-T-H.323-Protokoll (kurz: H.323) verwendet. Während sich das H.323-Protokoll bezüglich der Steuerdaten (Signalisierungsinformationen, Zustandsinformationen) signifikant von dem in den Kommunikationsnetzwerk N2 benutzten SIP-Protokoll unterscheidet, sind diese beiden Kommunikationsprotokolle bezüglich der übertragenen Sprachdaten, die in beiden Fällen gemäß RTP/RTCP (Real Time Protocol / Real Time Control Protocol) übertragen werden, miteinander kompatibel. Der Proxy-Server PRX dient also zum einen der Umsetzung der Steuerdaten in das im jeweiligen Kommunikationsnetzwerk verwendete Kommunikationsprotokoll, und zum anderen der Nutzung von zusätzlichen Anwendungen (Leistungsmerkmalen), die in Form von Diensten in dem Kommunikationsnetzwerk N2 genutzt werden, nicht jedoch der Umsetzung der Sprachdaten. Bezüglich der im ersten und der im zweiten Kommunikationsnetzwerk (N2) verwendeten Kommunikationsprotokolle ist der Proxy-Server (PRX) also eine Konvertierungseinrichtung.

Die in dem Proxy-Server PRX realisierten Einrichtungen (Verarbeitungseinheiten) zur Nutzung von Diensten des Kommunikationsnetzwerkes N2 werden auch als "Agenten" bezeichnet. Diese Agenten stellen sich dem SIP-Server K2 gegenüber als die entsprechenden Einrichtungen eines (weiteren) Endgerätes des Kommunikationsnetzwerkes N2 dar. So dient ein Registrierungs-Agent RA als eine Verarbeitungseinheit des Proxy-Servers PRX der Anmeldung eines Endgerätes bei dem SIP-Server K2. Selbstverständlich ist auch das Endgerät EG2 mit einer eigenen (hier nicht dargestellten) Registrierungsfunktion zu seiner Anmeldung bei dem SIP-Server K2 ausgestattet.

Eine weitere Verarbeitungseinheit des Proxy-Servers PRX ist ein Protokollumsetzer IWU (Interworking-Unit), der für Kommunikationsverbindungen (Gespräche, Faxe, etc.) die Steuer- und Signalisierungsinformationen des in dem Kommunikationsnetzwerk N1 genutzten Kommunikationsprotokolls H.323 in die Signalisierung gemäß des SIP-Protokolls des Kommunikationsnetzwerks N2 umsetzt. Der Protokollumsetzer IWU bedient sich dazu seitens des Kommunikationsnetzwerkes N1 eines Protokoll-Stacks PR1 zum Datenaustausch gemäß des H.323-Protokolls und seitens des Kommunikationsnetzwerkes N2 eines Protokoll-Stacks PR2 (SIP/SDP/SIMPLE-Protokolleinheit).

In dem Kommunikationsnetzwerk N2 ist ein Dienst verfügbar, der zum unmittelbaren Austausch von Nachrichten benutzt wird und der als "Instant Messaging" bekannt ist. Dazu ist in dem Endgerät EG2 eine entsprechende Applikation vorhanden, die das Benutzer-Interface zur Nutzung dieses Dienstes darstellt, und in dem SIP-Server K2 ist eine dem entsprechende Server-Applikation IM (Instant Messaging Server Application) zum Empfangen, zur Zwischenspeicherung und zum Versand von Nachrichten realisiert. In dem Proxy-Server PRX ist zur Kommunikation mit dieser Server-Applikation IM des SIP-Servers K2 die Verarbeitungseinheit (Funktionsmodul) Messaging-Agent IMA realisiert, welches sich seitens des Kommunikationsnetzwerkes N2 eines Protokoll-Stacks PR2 und seitens des Kommunikationsnetzwerkes N1 eines Protokoll-Stacks PC2 bedient. Der Protokoll-Stack PC2 kommuniziert mit der Kommunikationsanlage K1 unter Verwendung des Kommunikationsprotokolls C3, wofür in diesem Ausführungsbeispiel eine Ausprägung ("CSTA Phase III") des CSTA-Protokolls (CSTA = Computer Supported Telephony Application) verwendet wird. In dem CSTA-Protokoll sind Elemente zum Zugriff auf leitungsvermittelte Kommunikationseinlagen definiert, die auch die Übertragung von Zeichenfolgen umfassen, die auf Displays von Telephonie-Endgeräten dargestellt werden können.

Eine weitere Anwendung des "Messaging"-Dienstes ist die Anzeige von noch nicht gelesenen (neuen) E-Mails, die für den Nutzer des Endgerätes EG1 im E-Mail-Server EMS vorliegen. Dazu fragt der Messaging-Agent IMA in regelmäßigen Zeitabständen den E-Mail-Server EMS ab und zeigt neue Nachrichten über die Server-Applikation IM auf dem Display eines Endgerätes (in diesem Fall des Endgerätes EG2) an.

Eine weitere, viel genutzte Anwendung (man spricht hierbei auch von "Diensten")in Kommunikationsnetzwerken gemäß des SIP-Protokolls ist der sog. "Presence-Dienst". Dabei handelt es sich um eine Liste mit Teilnehmern und den jeweiligen Verfügbarkeits-Zuständen dieser Teilnehmer (nicht erreichbar, in einer Besprechung, auf Dienstreise, ...), die auf dem Display eines SIP-konformen Endgerätes (das kann auch ein Multimedia-PC sein) angezeigt wird. Diese Liste kann von dem Benutzer des entsprechenden Endgerätes individuell zusammengestellt werden, und sie zeigt dann beispielsweise die wichtigsten Kommunikationspartner des Benutzers an. Eine Besonderheit dieser Teilnehmerliste ist, dass dabei in der Anzeige des Endgerätes permanent Zustandsinformationen über die entsprechenden Teilnehmer angezeigt werden, beispielsweise, ob der entsprechende Teilnehmer frei, besetzt, aktiv (erreichbar) oder passiv ("offline") ist. Diese Informationen werden für alle "beobachteten" Teilnehmer (Endgeräte) im Presence-Server P des SIP-Servers K2 zwischengespeichert und an die jeweilige Presence-Applikation der Endgeräte, in diesem Fall des Endgerätes EG 2, weitergeleitet. Um das Endgerät EG1 in dem Kommunikationsnetzwerk N2 zu repräsentieren, umfasst der Proxy-Server PRX eine diesem Dienst zugeordnete Verarbeitungseinheit, den Presence-Agent PA. Während der Presence-Agent PA über den Protokoll-Stack PR2 dem SIP-Server K2 Zustandsinformationen über das Endgerät EG1 zur Verfügung stellt, nutzt er die Protokoll-Stacks PC3, PR3 und PR4, um an diese Zustandsinformationen zu gelangen. Über den Protokoll-Stack PC3 greift dazu der Presence-Agent PA unter Nutzung des Kommunikationsprotokolls C3 (CSTA-Phase III-Protokoll) auf die Kommunikationsanlage K1 zu, um den Zustand des Endgerätes EG1 (also "aktiv" oder "passiv") abzufragen. Zusätzlich greift der Presence-Agent PA über die Protokolleinheit PR3 unter Nutzung des Kommunikationsprotokolls MSP ("Mail-Server-Protokoll") auf den E-Mail-Server EMS zu. Auf dem E-Mail-Server EMS kann der Nutzer des Endgerätes EG1 ein E-Mail-Postfach unterhalten und in diesem einstellen, ob er abwesend ist, was dann zu einer entsprechenden Abwesenheitsnotiz bei eingehenden E-Mail-Nachrichten führt. Diese Einstellung wird von dem Presence-Agent PA abgefragt und ausgewertet und zur Feststellung bzw. Generierung einer Zustandsinformation über das Endgerät EG1 genutzt.

Der Presence-Agent PA kann noch weitere Datenquellen zur Bestimmung des Betriebszustandes des Endgerätes EG1 nutzen, wobei in der Figur 1 beispielhaft der Zeit-Server TS dargestellt ist. In dem Zeit-Server TS werden Daten gespeichert, die - beispielsweise in einem Unternehmen - von der Zutrittskontrolle (Chipkartenlesern an Türen, o. ä.) gespeichert werden. Es handelt sich also um eine Datenbank, aus der hervorgeht, ob eine Person in einem Gebäude anwesend ist oder nicht. Auf diese Datenbank greift die Presence-Applikation über die Protokolleinheit PR4 unter Nutzung eines Zugriffsprotokolls TPR (Time Server Protocol) zu, um die in dem Time-Server TS abgespeicherten Anwesenheitsinformationen zu dem Presence-Server P des SIP Proxy-Servers K2 und damit letztlich zu der Presence-Applikation des Endgerätes EG2 zu übermitteln.

Der Registrierungs-Agent RA des Proxy-Servers PRX dient als Registrierungseinrichtung der Registrierung des Endgerätes EG1 gegenüber dem SIP-Server K2. In dem in Figur 1 dargestellten Fall nimmt die Kommunikationsanlage K1 beim Anschluss des Endgerätes EG1 die Registrierung vor, indem eine entsprechende Nachricht an den Protokoll-Stack RPR (Registrierungs-Protokolleinheit) des Proxy-Servers PRX versendet. Diese Nachricht wird an den Registrierungs-Agenten RA weitergeleitet, dort verarbeitet und in eine neue Registrierungsmeldung umgesetzt, die über den Protokoll-Stack PR2 an den in den SIP-Server K2 angeordneten Registrierungs-Server R versendet wird.

Alternativ kann die Registrierung jedoch auch von einer externen, hier nicht dargestellten Instanz, beispielsweise einem Administrator-Arbeitsplatz, aus erfolgen. Dann wird von einem solchen Administrator-Arbeitsplatz aus über die Protokolleinheit RPR auf den Registrierungs-Agenten RA zugegriffen.

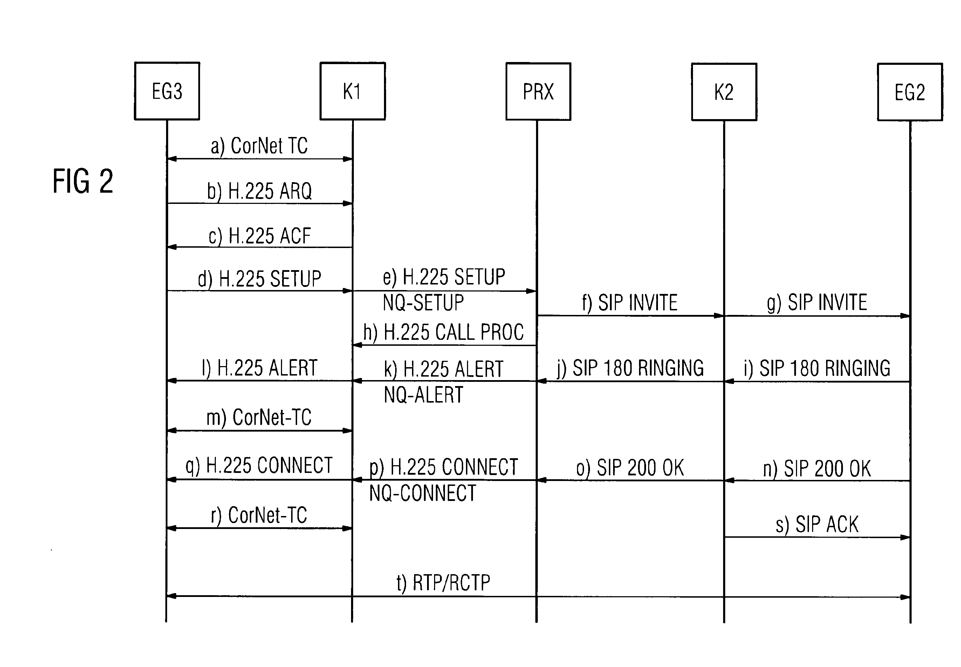

In der Figur 2 ist der zeitliche Ablauf des Aufbaus einer Kommunikationsverbindung zwischen dem Endgerät EG1 und dem Endgerät EG2 dargestellt. Zum Aufbau der Kommunikationsverbindung werden Steuerdaten (Signalisierungsinformationen) in Form von Steuermeldungen zwischen dem Endgerät EG1, der Kommunikationsanlage K1, dem Proxy-Server PRX, dem SIP-Server K2 und dem Endgerät EG2 ausgetauscht. Die dabei übertragenen Steuerdaten sind durch Pfeile visualisiert, wobei die Pfeilrichtung die Übertragungsrichtung der in dem jeweiligen Verfahrensschritt übermittelten Steuermeldung darstellt. Dabei ist jeder Pfeil mit einer Kurzbezeichnung versehen, auf die im Folgenden jeweils Bezug genommen wird und die eine Abkürzung für das in dem jeweiligen Verfahrensschritt verwendete Kommunikationsprotokoll ist. Die Darstellung ist dabei von oben nach unten zu lesen, d.h., dass die mit der Beschriftung "a) CorNet-TC" bezeichnete Steuermeldung bzw. Gruppe von Steuermeldungen bei Beginn des Verbindungsaufbaus ausgetauscht wurde, und dass die durch die Beschriftung "t) RTP/RCTP" und mit einem Doppelpfeil visualisierte etablierte Nutzdatenverbindung am Schluss des Verbindungsaufbaus steht.

Die mit den Abkürzungen K1, PRX, K2, EG2 bezeichneten Komponenten sind identisch zu den gleichlautend bezeichneten Komponenten aus der Figur 1. Ein Endgerät EG3, welches an der Kommunikationsanlage K1 angeschlossen ist, ist im Unterschied zu dem im Rahmen der Figurenbeschreibung zur Figur 1 eingeführten Endgerät EG1 ein sog. VoIP-Endgerät, also ein paketvermittelt kommunizierendes Sprachdaten-Endgerät. Prinzipiell kommuniziert das Endgerät EG3 gemäß dem bekannten Kommunikationsprotokoll H.323, wobei das H.323-Protokoll eine sog. Protokoll-Familie mit verschiedenen untergeordneten Protokollen darstellt. Des weiteren wird in dem Kommunikationsnetzwerk N1 der Standard G.711 verwendet, der die Komprimierung von Sprachdaten beschreibt, und der im Folgenden näher beschriebene Standard H.225, der die Signalisierung in Sprachdatennetzen gemäß des H.323-Protokolls beschreibt. Da der H.323-Standard - wie bereits oben bei der Einführung des SIP-Protokolls erwähnt - zwar weit verbreitet ist, aber nicht alle in modernen Kommunikationsnetzwerken gewünschten Leistungsmerkmale unterstützt, wird zwischen dem Endgerät EG3 und der Kommunikationsanlage K1 ein modifiziertes, erweitertes Kommunikationsprotokoll zur Signalisierung eingesetzt, welches firmenspezifisch ist und den Namen CorNet-TC trägt. Dies ist insbesondere für dieses Ausführungsbeispiel notwendig, weil an der Kommunikationsanlage K1 nicht nur paketvermittelt kommunizierende VoIP-Endgeräte, sondern auch leitungsvermittelte Endgeräte (wie das Endgerät EG1 aus Figur 1) angeschlossen sind, die mit dem proprietären und für leitungsvermittelte Kommunikationsnetzwerke entwickelten Kommunikationsprotokoll CorNet-TS angesteuert werden. Dieses Cor-Net-TS-Protokoll unterstützt einen großen Leistungsmerkmal-Umfang und wird deswegen in der für paketvermittelte Netzwerke abgewandelten Form als CorNet-TC-Protokoll eingesetzt.

In einem ersten Schritt meldet sich das Endgerät EG3 bei der Kommunikationsanlage K1 an. Für diesen Anmeldevorgang, der mit einem Pfeil mit dem Bezugszeichen a) visualisiert ist, wird das zuvor beschriebene Kommunikationsprotokoll CorNet-TC eingesetzt. In Schritt b) meldet das Endgerät EG3 bei der Kommunikationsanlage K1 einen Verbindungswunsch an, der durch die Meldung "ARQ" gemäß des H.225-Protokolls gemeldet wird. Die Kommunikationsanlage K1 antwortet in Schritt c) gemäß des gleichen Kommunikationsprotokolls mit der Meldung "ACF". Nun meldet in Schritt d) das Endgerät EG3 den konkreten Gesprächswunsch, der auch die Rufnummer des gerufenen Endgerätes EG2 umfasst, mit der Meldung "Setup" an die Kommunikationsanlage K1. Die Kommunikationsanlage K1 meldet diesen Wunsch weiter in Schritt e) zu dem Proxy-Server PRX. Der Proxy-Server PRX bestätigt auf der einen Seite in Schritt h) zu der Kommunikationsanlage K1 den empfangenen Befehl, und meldet auf der anderen Seite mit der Meldung "Invite" in Schritt f) gemäß des SIP-Protokolls an den SIP-Server K2 den Gesprächswunsch von Endgerät EG3 zum Endgerät EG2. In Schritt g) leitet der SIP-Server K2 diesen Gesprächswunsch an das Endgerät EG2 weiter, welches nun den Ruf signalisiert. Die Bestätigung, dass der Ruf gerade signalisiert wird, wird von dem Endgerät EG2 in Schritt i) mit der Meldung "Ringing" an den SIP-Server K2 und von diesem in Schritt j) mit der gleichen Meldung an den Proxy-Server PRX bestätigt. Von dem Proxy-Server PRX wird die Meldung "Ringing" in Schritt k) in das H.225-Protokoll damit auch in das CorNet-NQ-Protokoll (ein proprietäres erweitertes Kommunikationsprotokoll für Querverbindungen) umgesetzt und in Form der "Alert" bzw. "NQ-Alert"-Meldung an die Kommunikationsanlage K1 übermittelt. Von dort wird in Schritt 1) diese Meldung an das Endgerät EG3 weitergeleitet.

In Schritt n) wird zwischen dem Endgerät EG3 und der Kommunikationsanlage K1 in einer Meldung gemäß des CorNet-TC-Protokolls die Information darüber ausgetauscht, dass das Endgerät EG3 nunmehr für den Aufbau der Nutzdatenverbindung bereit ist. Nun tritt ein Wartezustand ein, der so lange anhält, bis der Benutzer des Endgerätes EG2 den Ruf annimmt. In diesem Fall verwendet das Endgerät EG2 in Schritt n) die Meldung "OK" zu dem SIP-Server K2, der wiederum diese Meldung "OK" in Schritt o) an den Proxy-Server PRX weiterleitet. Diese gemäß des SIP-Protokolls kodierte Meldung wird nun in dem Proxy-Server PRX in die Meldung "Connect" umgewandelt und in Schritt p) an die Kommunikationsanlage K1 übermittelt. Dabei ist die Meldung "Connect" zwar Teil des CorNet-NQ-Querverbindungs-Protokolls, aber gleichzeitig auch im H.225-Protokoll definiert. In Schritt q) wird diese Betätigung schließlich zu dem Endgerät EG3 weitergeleitet. Mit Empfang der Meldung "OK" in Schritt n) hat der SIP-Server K2 eine Bestätigungsmeldung an das Endgerät EG2 verschickt, mit deren Empfang das Endgerät EG2 nun den Sende- und Empfangsbetrieb bezüglich der Nutzdatenkanäle aufnimmt. Gleichfalls beginnt das Endgerät EG3 ebenfalls mit Empfang der "Connect-Meldung" in Schritt q) mit dem Sende- und Empfangsbetrieb auf den entsprechenden Nutzdatenkanälen, deren Parameter mit den zuvor beschriebenen protokollgemäßen Meldungen ausgehandelt wurden. Mit Aufnahme des Sende- und Empfangsbetriebs versendet das Endgerät EG3 in Schritt r) eine entsprechende Statusmeldung zu der Kommunikationsanlage K1, um damit den nun geänderten Rufzustand zu dokumentieren. Mit Aufnahme des Sende- und Empfangsbetrieb in Schritt t) besteht nun zwischen den Endgeräten EG3 und EG2 eine Nutzdatenverbindung gemäß des RTP/RCTP-Protokolls.

## Patentansprüche

1. Verfahren zum Zugriff auf ein erstes Endgerät (EG1) an einem ersten Kommunikationsknoten (K1) eines ersten Kommunikationsnetzwerkes (N1) durch einen zweiten Kommunikationsknoten (K2) in einem zweiten Kommunikationsnetzwerk (N2),
wobei das erste Endgerät (EG1) an dem ersten Kommunikationsknoten (K1) angemeldet wird,
wobei das erste und das zweite Kommunikationsnetzwerk (N1 und N2) zum Austausch von Steuer- und Nutzdaten miteinander verbunden sind,
**dadurch gekennzeichnet,**
**dass** der erste und der zweite Kommunikationsknoten (K1 und K2) über einen Proxy-Server (PRX) miteinander verbunden werden,
**dass** das erste Endgerät (EG1) bei dem zweiten Kommunikationsknoten (N2) wie ein Endgerät des zweiten Kommunikationsknotens (K2) angemeldet wird, so dass der zweite Kommunikationsknoten (K2) das erste Endgerät (EG1) als ein Endgerät des zweiten Kommunikationsknotens (K2) verwaltet,
**dass** von dem Proxy-Server (PRX) das erste Endgerät (EG1) in dem zweiten Kommunikationsnetzwerk (N2) repräsentiert wird,
indem die Steuerdaten, die das erste Endgerät betreffen, zwischen dem ersten Kommunikationsknoten (K1) und dem zweiten Kommunikationsknoten (K2) jeweils über den Proxy-Server (PRX) übertragen werden.

2. Verfahren nach Patentanspruch 1,
**dadurch gekennzeichnet,**
**dass** in dem ersten Kommunikationsnetzwerk (N1) ein erstes Kommunikationsprotokoll für das Datenformat der in dem ersten Kommunikationsnetzwerk (N1) verwendeten Steuerdaten verwendet wird,
**dass** in dem zweiten Kommunikationsnetzwerk (N2) ein zweites Kommunikationsprotokoll für das Datenformat der in dem zweiten Kommunikationsnetzwerk (N2) verwendeten Steuerdaten verwendet wird, und
**dass** von dem Proxy-Server (PRX) die über ihn von dem ersten Kommunikationsknoten (K1) zu dem zweiten Kommunikationsknoten (K2) übertragenen Steuerdaten von dem Datenformat gemäß des ersten Kommunikationsprotokolls in das Datenformat des zweiten Kommunikationsprotokolls umgesetzt wird, und umgekehrt.

3. Verfahren nach Patentanspruch 2,
**dadurch gekennzeichnet,**
**dass** durch den zweiten Kommunikationsknoten (K2) in dem zweiten Kommunikationsnetzwerk (N2) mindestens ein Dienst realisiert wird,
**dass** durch diesen Dienst Zustandsinformationen, die den Betriebszustand des ersten Endgerätes (EG1) beschreiben, verarbeitet werden,
**dass** von dem Dienst mit Steuerdaten in Form einer Anforderungsmeldung, die dem Datenformat des zweiten Kommunikationsprotokolls entspricht, die Zustandsinformationen bei dem Proxy-Server (PRX) angefordert werden,
**dass** von dem Proxy-Server (PRX) die Anforderungsmeldung in das Datenformat des ersten Kommunikationsprotokolls umgesetzt und zu dem ersten Kommunikationsknoten (K1) übertragen wird, dass von dem ersten Kommunikationsknoten (K1) als Antwort die Zustandsinformationen im Datenformat des ersten Kommunikationsprotokolls zu dem Proxy-Server (PRX) übertragen werden, dass von dem Proxy-Server (PRX) die Zustandsinformationen in das Datenformat des zweiten Kommunikationsprotokolls umgesetzt und zu dem zweiten Kommunikationsknoten (K2) übertragen werden, und
**dass** von dem Dienst in dem zweiten Kommunikationsknoten (K) die Zustandsinformationen verarbeitet werden.

4. Verfahren nach Patentanspruch 2,
**dadurch gekennzeichnet,**
**dass** durch den zweiten Kommunikationsknoten (K2) in dem zweiten Kommunikationsnetzwerk (N2) mindestens ein Dienst realisiert wird,
**dass** durch diesen Dienst Zustandsinformationen, die das erste Endgerät (EG1) betreffen, verarbeitet werden,
**dass** von dem Dienst mit Steuerdaten in Form einer Anforderungsmeldung, die dem Datenformat des zweiten Kommunikationsprotokolls entspricht, die Zustandsinformationen bei dem Proxy-Server (PRX) angefordert werden,
**dass** der Proxy-Server (PRX) mit einem dritten Kommunikationsknoten (EMS, TS), der Steuerdaten gemäß eines dritten Kommunikationsprotokolls austauscht, verbunden wird,
**dass** in dem dritten Kommunikationsknoten (EMS, TS) Zustandsinformationen über das erste Endgerät (EG1) und / oder einen dem ersten Endgerät (EG1) zugeordneten Benutzer gespeichert sind,
**dass** von dem Proxy-Server (PRX) die Anforderungsmeldung in das Datenformat des dritten Kommunikationsprotokolls umgesetzt und zu dem dritten Kommunikationsknoten (EMS, TS) übertragen wird,
**dass** von dem dritten Kommunikationsknoten (EMS, TS) als Antwort die Zustandsinformationen im Datenformat des dritten Kommunikationsprotokolls zu dem Proxy-Server (PRX) übertragen werden,
**dass** von dem Proxy-Server (PRX) die Zustandsinformationen in das Datenformat des zweiten Kommunikationsprotokolls umgesetzt und zu dem zweiten Kommunikationsknoten (K2) übertragen werden, und
**dass** von dem Dienst in dem zweiten Kommunikationsknoten (K2) die Zustandsinformationen verarbeitet werden.

5. Verfahren nach einem der vorhergehenden Patentansprüche,
**dadurch gekennzeichnet,**
**dass** als das zweite Kommunikationsnetzwerk (N2) ein paketvermitteltes Kommunikationsnetzwerk verwendet wird,
**dass** in dem zweiten Kommunikationsnetzwerk (N2) das SIP-Protokoll als Kommunikationsprotokoll verwendet wird, und
**dass** als der zweite Kommunikationsknoten (N2) ein SIP-Proxy-Server eingesetzt wird.

6. Verfahren nach einem der vorhergehenden Patentansprüche,
**dadurch gekennzeichnet,**
**dass** die Anmeldung des ersten Endgerätes (EG1) bei dem zweiten Kommunikationsknoten (K2) durch den Proxy-Server (PRX) erfolgt.

7. Verfahren nach einem der vorhergehenden Patentansprüche,
**dadurch gekennzeichnet,**
**dass** durch den Proxy-Server (PRX) mehrere Endgeräte in dem zweiten Kommunikationsnetzwerk (N2) repräsentiert werden.

8. Verfahren nach einem der vorhergehenden Patentansprüche,
**dadurch gekennzeichnet,**
**dass** von dem Proxy-Server (PRX) beim Aufbau einer Kommunikationsverbindung zwischen dem ersten Endgerät (EG1) und einem Endgerät (EG2) des zweiten Kommunikationsnetzwerkes (N2) jeweils die für den Aufbau der Kommunikationsverbindung notwendigen Steuerdaten zwischen dem ersten und dem zweiten Kommunikationsknoten (K1 und K2) übertragen werden.

9. Anordnung für den Zugriff auf ein erstes Endgerät (EG1) eines ersten Kommunikationsnetzwerkes (N1) durch einen zweiten Kommunikationsknoten (K2) in einem zweiten Kommunikationsnetzwerkes (N2),
wobei in dem ersten Kommunikationsnetzwerk (N1) ein erster Kommunikationsknoten (K1) vorgesehen ist,
wobei das erste Endgerät (EG1) an dem ersten Kommunikationsknoten (K1) und ein zweites Endgerät (EG2)an dem zweiten Kommunikationsknoten (K2) angemeldet ist,
wobei das erste Endgerät (EG1) zur Anmeldung an dem ersten Kommunikationsknoten (K1) ausgebildet ist,
wobei das erste Kommunikationsnetzwerk (N1) zur Übertragung von Steuerdaten in einem Datenformat gemäß eines ersten Kommunikationsprotokolls und das zweite Kommunikationsnetzwerk (N2) zur Übertragung von Steuerdaten in einem Datenformat gemäß eines zweiten Kommunikationsprotokolls ausgebildet ist, und
wobei das erste und das zweite Kommunikationsnetzwerk (N1 und N2) zum Austausch von Steuer- und Nutzdaten miteinander verbunden sind,
**dadurch gekennzeichnet,**
**dass** ein Proxy-Server (PRX) für den Zugriff auf das erste Endgerät (EG1) eingesetzt ist,
der eine Registrierungseinrichtung (RA) zur Anmeldung des ersten Endgerätes (EG1) als ein Endgerät des zweiten Kommunikationsnetzwerkes (N2) bei dem zweiten Kommunikationsknoten (K2) aufweist,
der eine Konvertierungseinrichtung aufweist, die zur Umsetzung derjenigen das erste Endgerät betreffende Steuerdaten, die von dem zweiten Kommunikationsknoten versendet werden, in das Datenformat gemäß des ersten Kommunikationsprotokolls ausgebildet ist,
und derjenigen das erste Endgerät (EG1) betreffende Steuerdaten, die von dem ersten Kommunikationsknoten (K1) versendet werden, in das Datenformat gemäß des zweiten Kommunikationsprotokolls ausgebildet ist.

10. Anordnung nach Patentanspruch 9,
**dadurch gekennzeichnet,**
**dass** in dem zweiten Kommunikationsnetzwerk (N2) eine Anwendung (P) zur Realisierung eines Dienstes vorgesehen ist, der Zustandsinformationen über das erste Endgerät (EG1) verarbeitet,
**dass** die Anwendung (P) zur Anforderung der Zustandsinformationen bei dem Proxy-Server (PRX) ausgebildet ist,
**dass** in dem Proxy-Server (PRX) eine Verarbeitungseinheit (PA) vorgesehen ist, die zur Anforderung der Zustandsinformationen bei dem ersten Kommunikationsknoten (K1) und zur Weiterleitung der Zustandsinformationen zu der Anwendung (P) ausgebildet ist.

11. Anordnung nach Patentanspruch 9 oder 10,
**dadurch gekennzeichnet,**
**dass** in dem zweiten Kommunikationsnetzwerk (N2) eine Anwendung (IM) zur Realisierung eines Dienstes realisiert ist, der dem ersten Endgerät (EG1) zugeordnete Nachrichten verarbeitet,
**dass** in dem Proxy-Server (PRX) eine Verarbeitungseinheit (IMA) angeordnet ist, die zur Anforderung der zugeordneten Nachrichten bei einem Kommunikationsknoten (EMS) und zur Weiterleitung der zugeordneten Nachrichten zu der weiteren Anwendung (IM) ausgebildet ist.
